# EUROPEAN PATENT SPECIFICATION

(11) **EP 1 104 077 B1**
(45) Date of publication and mention of the grant of the patent: **26.12.2012**
(21) Application number: 00124562.0
(22) Date of filing: 09.11.2000
(51) Int. Cl.: H02K 1/27, H02K 21/22

(54) **Permanent magnet rotary electric motor**
Permanentmagnetischer rotierender Elektromotor
Moteur électrique rotatif à aimants permanents

(30) Priority: 19.11.1999 JP 32972099
(43) Date of publication of application: 30.05.2001
(73) Proprietor: HONDA GIKEN KOGYO KABUSHIKI KAISHA, Minato-ku Tokyo (JP)
(72) Inventor: Shibata, Kazumi, Wako-shi Saitama (JP); Tanaka, Kunihiko, Wako-shi Saitama (JP); Onozawa, Seiji, Wako-shi Saitama (JP)
(74) Representative: Liska, Horst

(56) References cited:
- EP-A- 0 773 621
- US-A- 4 115 716
- PATENT ABSTRACTS OF JAPAN vol. 1999, no. 10, 31 August 1999 (1999-08-31) -& JP 11 146586 A (RAILWAY TECHNICAL RES INST;HITACHI METALS LTD), 28 May 1999 (1999-05-28)
- PATENT ABSTRACTS OF JAPAN vol. 1999, no. 09, 30 July 1999 (1999-07-30) -& JP 11 098731 A (MATSUSHITA ELECTRIC IND CO LTD), 9 April 1999 (1999-04-09)

## Description

This invention relates to a permanent magnet rotary electric motor according to the preamble of claim 1 wherein a rotor yoke including a plurality of permanent magnets disposed in a circumferential direction rotates around a stator and the rotor yoke has a commutating pole portion between each adjacent ones of the permanent magnets, and more particularly to a permanent magnet rotary electric motor suitable as a stator-generator for an internal combustion engine.

A permanent magnet rotary electric motor according to the preamble of claim 1 is known from JP11-146586 A. Further permanent magnet rotary electric motors are known from JP11-09 8731 A, EP-A-0 773 621 and US-A-4 115 716.

Conventionally, a starter motor and a generator for an internal combustion engine are installed separately from each other. However, a starter-generator apparatus wherein the functions of them are integrated is disclosed, for example, in the official gazette of Japanese Patent Laid-Open No. JP 148142/1998.

Meanwhile, as a starter motor for an internal combustion engine, a permanent magnet rotary electric motor of the external rotation type wherein a cylindrical rotor yoke rotates around a stator is known. As one of such permanent magnet rotary electric motors as just described, a permanent magnetic rotary electric motor is disclosed, for example, in the official gazette of Japanese Patent Laid-Open No. JP 275476/1996 wherein a commutating pole portion is formed between each adjacent ones of the permanent magnets in order to moderate a distortion of the magnetic flux distribution between the rotor and stator to prevent occurrence of torque oscillations.

In the conventional permanent magnet rotary electric motor described above, however, leakage fluxes whose magnetic path is a commutating pole appear between adjacent permanent magnets between which the commutating pole is positioned, and they decrease effective magnetic fluxes. Accordingly, if it is intended to obtain higher driving torque, then it is necessary to use permanent magnets of a larger size or increase the exciting current of the stator windings. This, however, gives rise to increase in size and weight of the motor and increase of the power consumption.

Further, where it is intended to cause one motor to function as a starter motor upon starting of an internal combustion engine but function as a generator when a vehicle runs, if permanent magnets having an increased size are used, then when the motor functions as a starter motor, high driving torque is obtained. However, when the motor functions as a generator, higher power than necessary power is generated by the motor. Consequently, the torque (driven torque) required for the internal combustion engine E to drive the starter-generator apparatus becomes high.

It is an object of the present invention to provide a permanent magnet rotary electric motor as a starter-generator apparatus with which high driving torque is obtained when operating as a starter motor, while the driven torque can be reduced when operating as a generator.

This object is achieved by a permanent magnet rotary electric motor according to claim 1.

The permanent magnet rotary electric motor includes a stator and a winding on the stator, and a substantially cylindrical rotor yoke including a plurality of permanent magnets disposed along a circumferential direction and rotatable around the stator and wherein the rotor yoke has a commutating pole portion between each adjacent ones of the permanent magnets.

According to the characteristic of claim 1, since a gap is formed between each of the permanent magnets and the rotor yoke and leakage fluxes whose magnetic path is provided by the gap portion decrease, effective components of the magnetic flux increase and the driving torque increases.

As described above, according to the present invention, a permanent magnet rotary electric motor wherein a rotor yoke of an outer rotor has a commutating pole portion between each adjacent ones of permanent magnets is constructed such that a gap is provided between each of the permanent magnets and the rotor yoke. Consequently, leakage fluxes between adjacent ones of the permanent magnets decrease, and magnetic fluxes which perpendicularly intersect with an air gap portion between the outer rotor and a stator increase. Accordingly, the driving torque when the permanent magnet rotary electric motor functions as a starter motor can be increased without increasing the driven torque when the permanent magnet rotary electric motor functions as a generator.

In the following, the present invention is described in detail with reference to the drawings.
FIG. 1 is a side elevational view of an entire motorcycle of the scooter type wherein a permanent magnet rotary electric motor of the present invention is applied to a starter-generator apparatus.
FIG. 2 is a sectional view taken along a crankshaft of a swing unit of FIG. 1.
FIG. 3 is a plan view, partly broken, of the starter-generator apparatus (permanent magnet rotary electric motor) in a plane perpendicular to the rotary shaft (crankshaft).
FIG. 4 is a side elevational sectional view of FIG. 3.
FIG. 5 is a plan view of a rotor yoke.
FIG. 6 is a side elevational view of the rotor yoke.
FIG. 7 is a partial enlarged view of the rotor yoke.
FIG. 8 is a block diagram of a control system of the starter-generator apparatus.
FIG. 9 is a view illustrating a function (as an electric motor) of a gap portion provided on the rotor yoke.
FIG. 10 is a view illustrating a function (as a generator) of the gap portion provided on the rotor yoke.
FIG. 11 is a view showing a shape in plan of a rotor yoke in a second embodiment of the present invention.
FIG. 12 is a partial enlarged view in a state wherein a permanent magnet is fitted in an opening portion of FIG. 11.
FIG. 13 is a view showing a shape in plan of a rotor yoke in a third embodiment of the present invention.
FIG. 14 is a partial enlarged view in a state wherein a permanent magnet is fitted in an opening portion of FIG. 13.
FIG. 15 is a view showing a shape in plan of a rotor yoke in a fourth embodiment of the present invention.
FIG. 16 is a partial enlarged view in a state wherein a permanent magnet is fitted in an opening portion of FIG. 19.
FIG. 17 is a partial enlarged view of FIG. 9.
FIG. 18 is a partial enlarged view of FIG. 10.

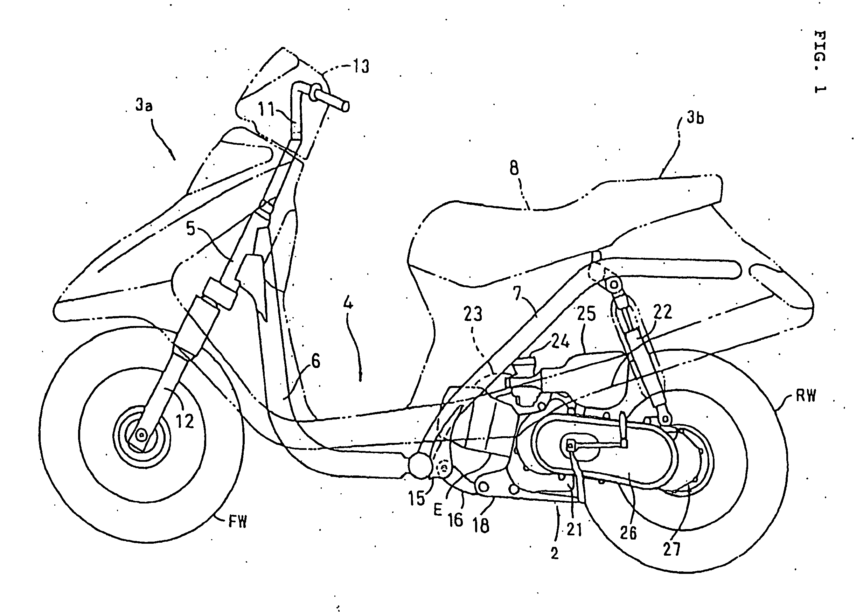

FIG. 1 is a side elevational view of an entire motorcycle of the scooter type wherein a permanent magnet rotary electric motor of the present invention is applied to a starter-generator apparatus.

A vehicle body front portion 3a and a vehicle body rear portion 3b are connected to each other by a low flow section 4, and a body frame which forms the skeleton of the vehicle body is generally formed from a down tube 6 and a main pipe 7. A fuel tank and an accommodating box (both not shown) are supported on the main pipe 7, and a seat 8 is disposed above them.

In the vehicle body front portion 3a, a handle bar 11 is supported for pivotal motion at a high position on a steering head 5, and a front fork 12 extends downwardly and a front wheel FW is supported for rotation at a lower end of the front fork 12. The handle bar 11 is covered from above with a handle cover 13 which serves also as an instrument panel. A bracket 15 is provided in a projecting manner at a lower end of a rising portion of the main pipe 7, and a hanger bracket 18 of a swing unit 2 is connected and supported for rocking motion to and on the bracket 15 through a link member 16.

A two-stroke internal combustion engine E of a single cylinder is carried at a front portion of the swing unit 2. A belt type non-stage transmission 26 is formed to extend rearwardly from the internal combustion engine E, and a rear wheel RW is supported for rotation on a speed reduction gear 27 which is provided at a rear portion of the belt type non-stage transmission 26 through a centrifugal clutch. A rear cushion 22 is interposed between an upper end of the speed reduction gear 27 and an upper bent portion of the main pipe 7. A carburetor 24 connected to an intake pipe 23 extending from the internal combustion engine E and an air cleaner 25 connected to the carburetor 24 are disposed at a front portion of the swing unit 2.

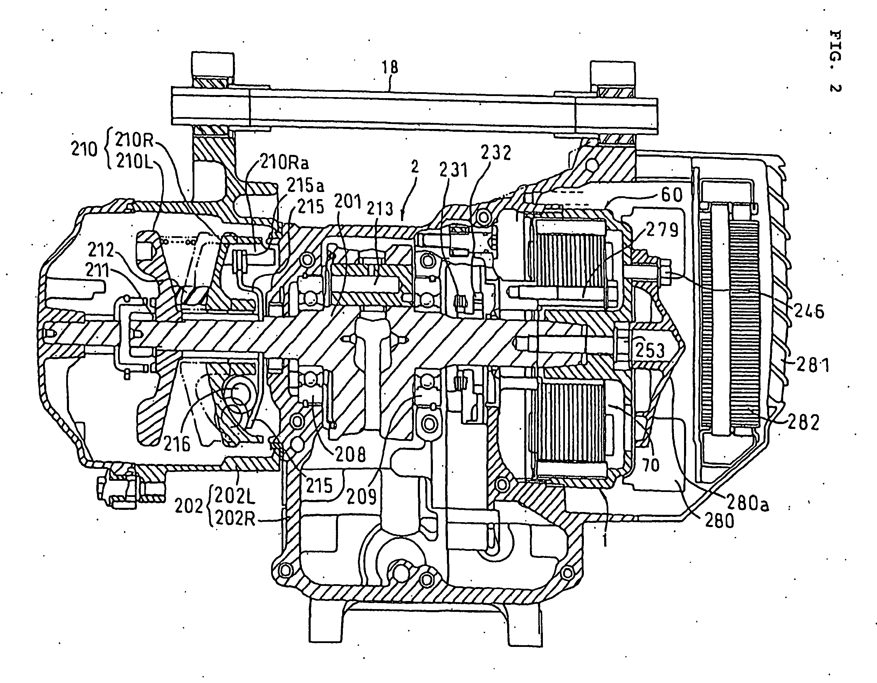

FIG. 2 is a sectional view taken along a crankshaft 201 of the swing unit 2 of FIG. 1, and same reference characters to those described above denote the same or equivalent portions.

The swing unit 2 is covered with a crankcase 202 formed from a pair of left and right left crankcases 202L and 202R joined together, and the crankshaft 201 is supported for rotation by bearings 208 and 209 secured to the crankcase 202R. A con'rod (not shown) is connected to the crankshaft 201 through a crank pin 213.

The left crankcase 202L serves also as a belt type non-stage transmission chamber case, and a belt driving pulley 210 is provided for rotation on a crankshaft 201 which extends to the left crankcase 202L. The belt driving pulley 210 is formed from a fixed side pulley half 210L and a movable side pulley half 210R, and the fixed side pulley half 210L is securely mounted at a left end portion of the crankshaft 201 through a boss 211. The movable side pulley half 210R is spline-fitted on the crankshaft 201 on the right side of the fixed side pulley half 210L such that it can move toward and away from the fixed side pulley half 210L. A V-belt 212 is wrapped around and between the two pulley halves 210L and 210R.

A cam plate 215 is securely mounted on the crankshaft 201 on the right side of the movable side pulley half 210R, and a slide piece 215a provided at an outer peripheral end of the cam plate 215 is held in sliding engagement with a cam plate sliding boss portion 210Ra formed in an axial direction at an end of an outer periphery of the movable side pulley half 210R. The cam plate 215 of the movable side pulley half 210R has a tapering face whose portion adjacent the outer periphery is inclined toward the cam plate 215 side, and a drive weight ball 216 is accommodated in a space between the tapering face and the movable side pulley half 210R.

If the speed of rotation of the crankshaft 201 increases, then the drive weight ball 216 which is positioned between and rotates together with the movable side pulley half 210R and the cam plate 215 is moved in a centrifugal direction by centrifugal force, and the movable side pulley half 210R is pushed by the drive weight ball 216 to move leftwardly toward the fixed side pulley half 210L. As a result, the V-belt 212 held between the two pulley halves 210L and 210R is moved in the centrifugal direction, whereupon the wrapping diameter thereof increases.

A driven pulley (not shown) corresponding to the belt driving pulley 210 is provided at a rear portion of the vehicle, and the V-belt 212 extends to and around the driven pulley. By this belt transmission mechanism, power of the internal combustion engine E is transmitted under automatic adjustment to the centrifugal clutch and drives the rear wheel RW through the speed reduction gear 27 and so forth.

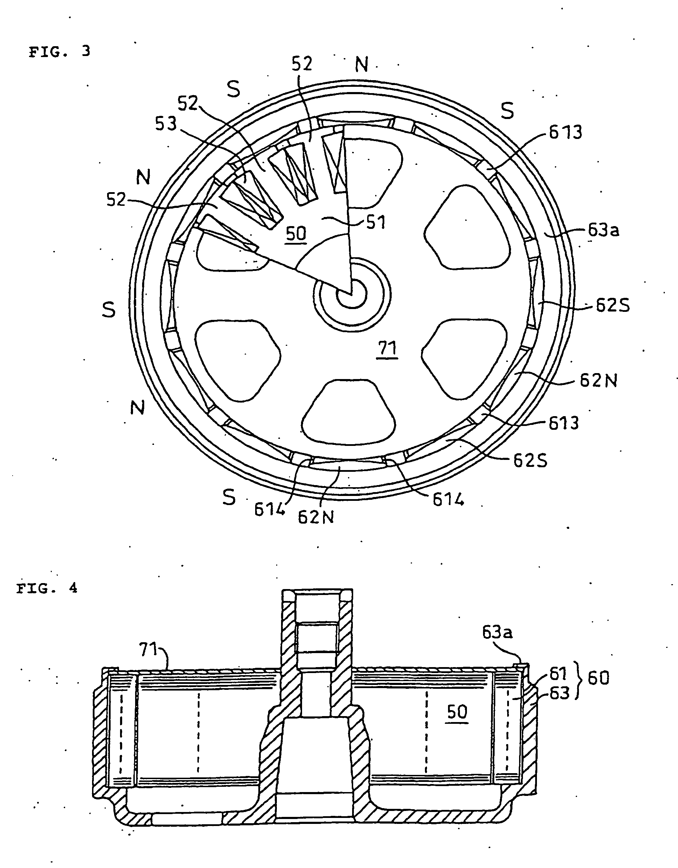

A starter-generator apparatus 1 which is a combination of a starter motor and an AC generator is disposed in the right crankcase 202R. In the starter-generator apparatus 1, an outer rotor 60 is secured to a tapered portion at an end of the crankshaft 201 by means of a screw 253. An inner stator 50 disposed inside the outer rotor 60 is fastened to and supported on the crankcase 202 by means of a bolt 279. It is to be noted that a configuration of the starter-generator apparatus 1 is hereinafter described in detail with reference to FIGS. 3 to 7.

A fan 280 is securely mounted at a skirt portion of a central conical portion 280a thereof on the outer rotor 60 by means of a bolt 246. The fan 280 is covered with a fan cover 281 with a radiator 282 interposed therebetween.

A sprocket wheel 231 is secured to the crankshaft 201 between the starter-generator apparatus 1 and a bearing 209, and a chain for driving a camshaft (not shown) extends from the crankshaft 201 to the sprocket wheel 231. It is to be noted that the sprocket wheel 231 is formed integrally with a gear 232 for transmitting power to a pump provided for circulating lubricating oil.

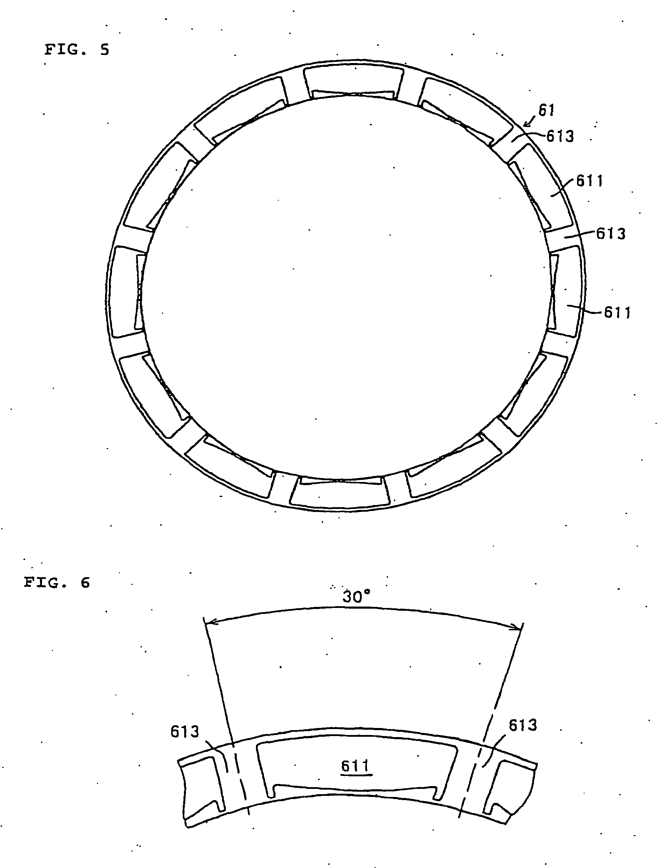

FIGS. 3 and 4 are a plan view partly broken and a side elevational sectional view of the starter-generator apparatus 1 (permanent magnet rotary electric motor) in a plane perpendicular to the rotary shaft (crankshaft 201), and FIGS. 5 and 6 are a plan view and a partial enlarged view a the rotor yoke. In those figures, same reference characters to those described above denote the same or equivalent portions.

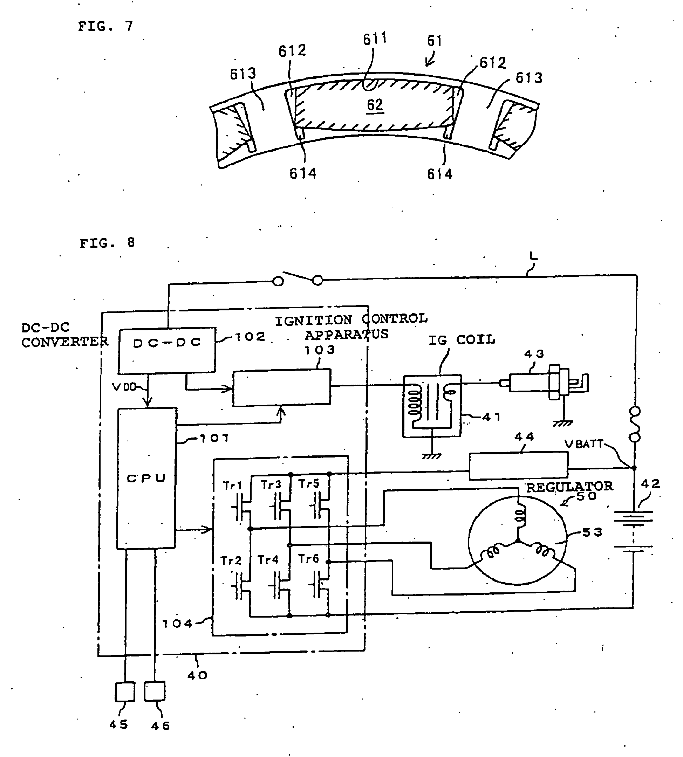

The starter-generator apparatus 1 of the present embodiment is formed from the stator 50 and the outer rotor 60 which rotates around the stator 50 as shown in FIGS. 3 and 4. The outer rotor 60 includes a rotor yoke 61 formed from ring-shaped silicon steel plates (thin plates) layered in a substantially cylindrical form as shown in FIGS. 4 and 5, N pole permanent magnets 62N and S pole permanent magnets 62S fitted alternately in a plurality of opening portions 611 provided in a circumferential direction of the rotor yoke 61 as shown in FIGS. 3 and 7, and a cup-shaped rotor case 63 which connects the rotor yoke 61 to the crankshaft 201 as shown in FIGS. 3 and 4.

The rotor case 63 has a pawl portion 63a at a circumferential end portion thereof, and by bending the pawl portion 63a to the inner side, the rotor yoke 61 of the layered structure described above is held in the axial direction and besides the permanent magnets 62 (62N and 62S) fitted in the opening portions 611 of the rotor yoke 61 are held at predetermined positions in the rotor yoke 61.

The stator 50 is formed from layered silicon steel plates (thin plates) and includes a stator core 51 and stator salient-poles 52 as shown in FIG. 3. Each of the stator salient-poles 52 has a stator winding 53 wound in a single pole concentrated manner therearound, and a principal face of the inner stator 50 is covered with a protective cover 71.

Totaling 12 opening portions 611 in each of which a permanent magnet 62 is inserted in the axial direction are formed on the rotor yoke 61 at intervals of 30 degrees in the circumferential direction as shown in FIGS. 5 and 6. A portion between each adjacent ones of the opening portions 611 functions as a commutating pole portion 613.

A permanent magnet 62 having a substantially drum-shaped cross section is inserted in each of the opening portions 611 as shown in FIG. 7. Here, in the present embodiment, the shape of the opening portion 611 and the sectional shape of the permanent magnet 62 are not same as each other, but in a state wherein the permanent magnet 62 is inserted in the opening portion 611, first gaps 612 are formed at the opposite side portions of the permanent magnet 62 along the circumferential direction while second gaps 614 are formed at the opposite end portions of the permanent magnet 62 adjacent the stator.

FIG. 8 is a block diagram of a control system of the starter-generator apparatus 1, and same reference characters to those described above denote the same or equivalent portions.

A control unit 40 includes a DC-DC converter 102 for converting a output voltage VBATT of a battery 42 into a logic voltage VDD and supplying the logic voltage VDD to a CPU 101, an ignition control apparatus 103 for controlling feeding to the IG coil 41 to cause an ignition plug 43 to ignite at a predetermined timing, and a three-phase driver 104 for converting the battery voltage VBATT into three-phase ac power and supplying the three-phase ac power to the stator windings 53 of the starter-generator apparatus 1.

A throttle sensor 45 detects a throttle opening θ th and notifies the CPU 101 of the throttle opening θ th. A rotor sensor 46 detects a rotational position of the outer rotor 60 and notifies the CPU 101 of the rotational position. A regulator 44 controls induced electromotive force generated in the stator windings 53 in accordance with rotation of the outer rotor 60 to a predetermined battery voltage VBATT and supplies the battery voltage VBATT to a power supply line L.

In such a construction as described above, upon starting of the engine, the CPU 101 determines excitation timings of the stator windings 53 based on a rotational position of the outer rotor 60 detected by the rotor sensor 46 and controls switching timings of power FETs of the three-phase driver 104 so that ac powers are supplied to individual phases of the stator windings 53.

The power FETs (Trl to Tr6) of the three-phase driver 104 are PWM controlled by the CPU 101, and the duty ratio of them, that is, the driving torque, is controlled based on the throttle opening θ th detected by the throttle sensor 45.

On the other hand, after the internal combustion engine E is started, feeding from the three-phase driver 104 to the stator windings 53 is stopped, and now, the starter-generator apparatus 1 is driven by the internal combustion engine E. At this time, electromotive force is generated in the stator windings 53 in response to the speed of rotation of the crankshaft 201. The electromotive force is controlled to the battery voltage VBATT by the regulator 44 and then supplied to the electric loads. Meanwhile, surplus power is used to charge the battery 42.

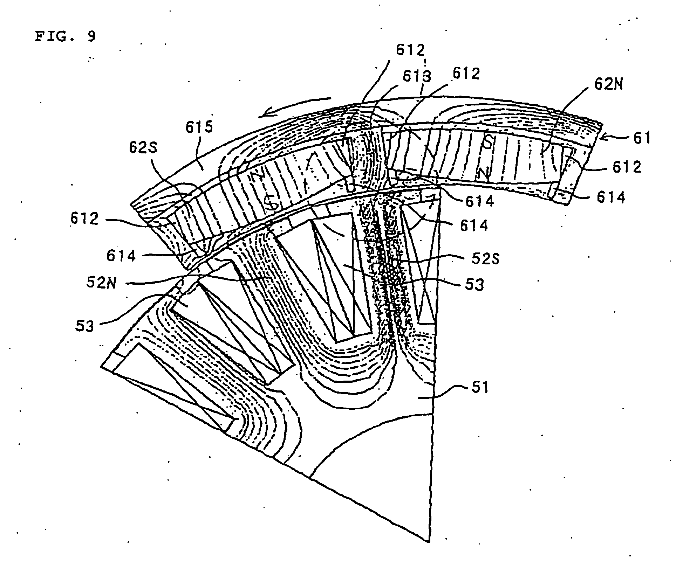

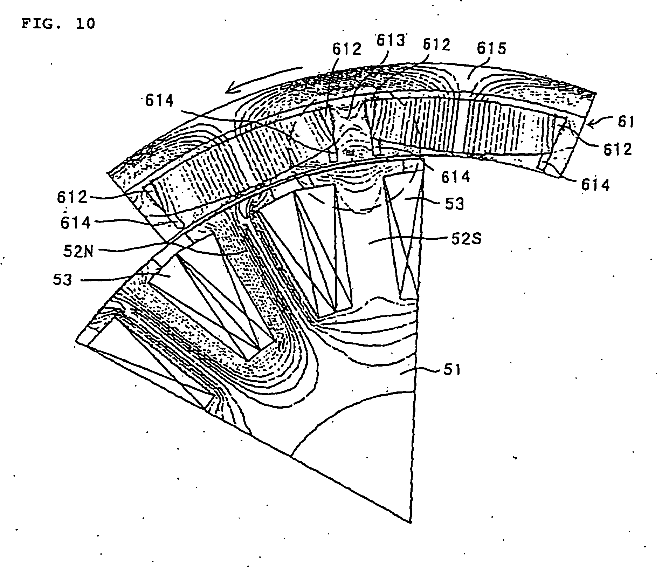

Subsequently, operation of the gaps 612 and 614 provided on the rotor yoke 61 is described with reference to FIGS. 9 and 10.

FIG. 9 is a view illustrating a magnetic flux density distribution when the starter-generator apparatus 1 function as a starter motor, and FIG. 10 is a view illustrating a magnetic flux density distribution when the apparatus 1 functions as a generator.

When the starter-generator apparatus 1 is to function as a starter motor, if exciting current is supplied from the battery 42 to the stator windings 53 through the control unit 40, then as seen in FIG. 9, lines of magnetic force generated in radial directions from a stator salient-pole 52N excited to the N pole pass from the stator side front face to the rear face of an S pole permanent magnet 62S, and most of the lines of magnetic force pass through a core portion 615 and a commutating pole portion 613 of the rotor yoke 61 and then through an adjacent stator salient-pole 52S excited to the S pole and the stator core 51 and return to the stator salient-pole 52N excited to the N pole.

At this time, in the present embodiment, the first gaps 612 are formed at the opposite side portions of each of the permanent magnets 62 along the circumferential direction and decrease leakage fluxes from the side portions of the permanent magnet 62 to the commutating pole portion 613. Consequently, most of the lines of magnetic force pass from the permanent magnet 62 to the core portion 615 of the rotor yoke 61 and further pass to the inner stator 50 side through the commutating pole portion 613. As a result, since vertical components of the magnetic fluxes which pass the air gap between the outer rotor 60 and the inner stator 50 increase, the driving torque can be increased when compared with an alternative case wherein the first gaps 612 are not provided.

Further, in the present embodiment, since the second gaps 614 for limiting the magnetic path in the circumferential direction are formed also at the opposite end portions of the permanent magnets 62 adjacent the stator, also leakage fluxes which pass the inside of the rotor yoke 61 decrease.

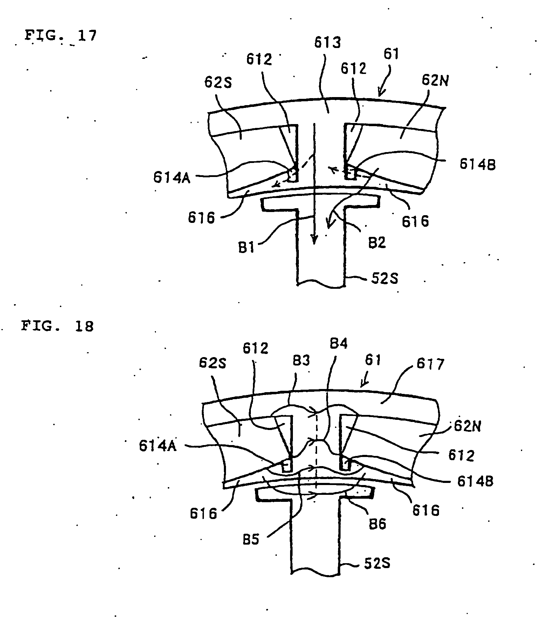

In particular, as a portion in a broken line circle of FIG. 9 is shown in an enlarged scale in FIG. 17, one (614A) of the gaps 614 acts to efficiently introduce a magnetic flux B1 from the commutating pole portion 613 of the rotor yoke 61 to the stator salient-pole 52S, and the other (614B) of the second gaps 614 acts to efficiently introduce a magnetic flux B2 which passes a inner side circumferential portion 616 of the rotor yoke 61 from the N pole permanent magnet 62N to the stator salient-pole 52S. As a result, vertical components of the magnetic flux which pass the air gap between the outer rotor 60 and the stator 50 further increase, and the driving torque as the starter motor can be further increased.

On the other hand, when the starter-generator apparatus 1 is to function as a generator, a magnetic flux generated from each of the permanent magnets 62 forms a closed magnetic path together with a stator salient-pole and the stator core as shown in FIG. 10. Consequently, generation current corresponding to the speed of rotation of the rotor can be generated in the stator winding.

It is to be noted that, in the present embodiment, when the output voltage when the regulation voltage by the regulator 44 is set to 14.5 V and the starter-generator apparatus 1 is caused to function as a generator reaches the regulation voltage mentioned above, the ground side transistors Tr2, Tr4 and Tr6 among the power FETs are short-circuited. Consequently, short current flows through the stator windings 53, and the lines of magnetic force which pass in the inner stator 50 decrease while leakage fluxes interconnecting adjacent ones of the permanent magnets 62 increase, and accordingly, the driven torque of the starter-generator apparatus 1 decreases and the load to the internal combustion engine E decreases.

In particular, as a portion in a broken line circle of FIG. 10 is shown in an enlarged scale in FIG. 18, a magnetic flux B3 which passes an outer side circumferential portion 617 of the rotor yoke 61, a magnetic flux B4 which passes a commutating pole portion 613 of the rotor yoke 61, a magnetic flux B5 which passes an inner side circumferential portion 616 of the rotor yoke 61 and a magnetic flux B6 which passes the inner side circumferential portion 616 of the rotor yoke 61, the air gap and a stator salient-pole 52N are generated between adjacent ones of the permanent magnets 62S and 62N.

As described above, according to the present embodiment, since, in the permanent magnet rotary electric motor wherein the rotor yoke 61 of the outer rotor 60 has a commutating pole portion 613 between each adjacent ones of the permanent magnets 62, gaps 612 (614) are provided between each of the permanent magnets 62 and the rotor yoke 61, leakage fluxes between adjacent ones of the permanent magnets decrease while magnetic fluxes which vertically pass the air gap portion between the outer rotor 60 and the stator 50 increase. Accordingly, the driving torque when the permanent magnet rotary electric motor functions as a starter motor can be increased without increasing the driven torque when the permanent magnet rotary electric motor functions as a generator.

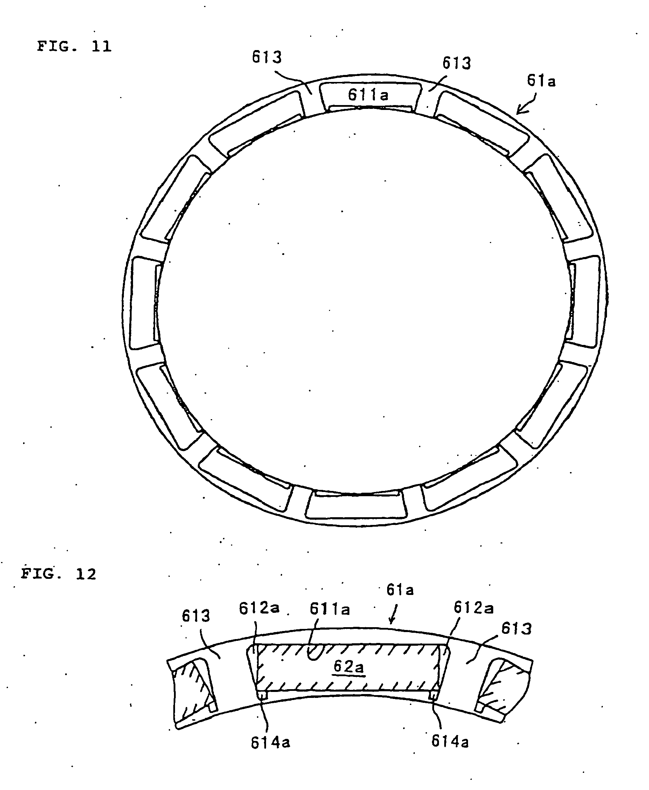

FIG. 11 is a view showing a shape in plan of a rotor yoke 61a in a second embodiment of the present invention, and FIG. 12 is a partial enlarged view in a state wherein permanent magnets 62a are fitted in opening portions 611a of the rotor yoke 61a. In the figures, same reference characters to those described above denote the same or equivalent portions.

In the present embodiment, the rotor yoke 61a has substantially trapezoidal opening portions 611a, and the permanent magnets 62a having a rectangular cross section are fitted in the opening portions 611a. As a result, gaps 612a for preventing leakage fluxes between adjacent ones of the permanent magnets 62a are formed at the opposite side portions of each of the permanent magnets 62a along the circumferential direction, and also at the opposite end portions of each of the permanent magnets 62a adjacent the stator, second gaps 614 for limiting the magnetic path in the circumferential direction are formed. Consequently, similar effects to those described above are achieved.

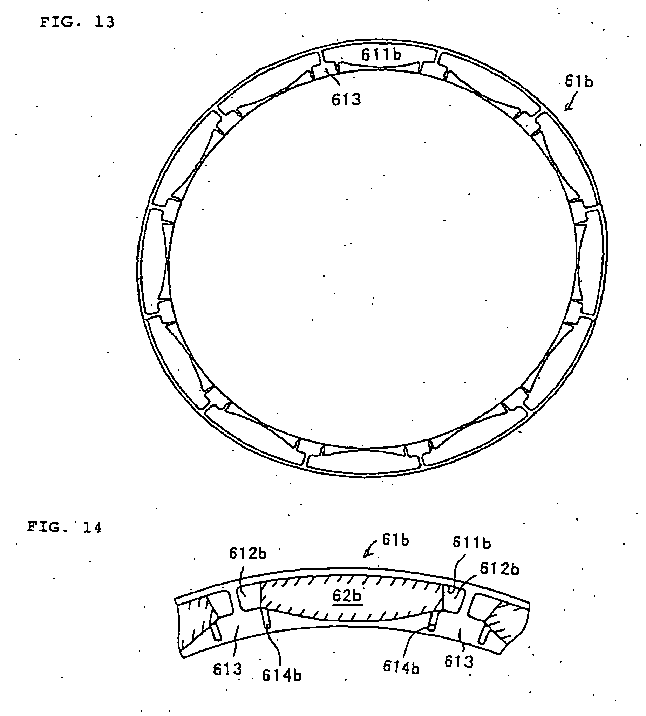

FIG. 13 is a view showing a shape in plan of a rotor yoke 61b in a third embodiment of the present invention, and FIG. 14 is a partial enlarged view in a state wherein permanent magnets 62b are fitted in opening portions 611b of the rotor yoke 61b. In the figures, same reference characters to those described above denote the same or equivalent portions.

In the present embodiment, the rotor yoke 61b has opening portions 611b of a special drum-shape, and permanent magnets 62b having a drum-shaped cross section are fitted in the opening portions 611b. As a result, gaps 612b for preventing leakage fluxes between adjacent ones of the permanent magnets 62b are formed at the opposite side portions of each of the permanent magnets 62b along the circumferential direction, and gaps 614b for limiting the magnetic path in the circumferential direction are formed also at the opposite end portions of each of the permanent magnets 62b adjacent the stator. Consequently, similar effects to those described above are achieved.

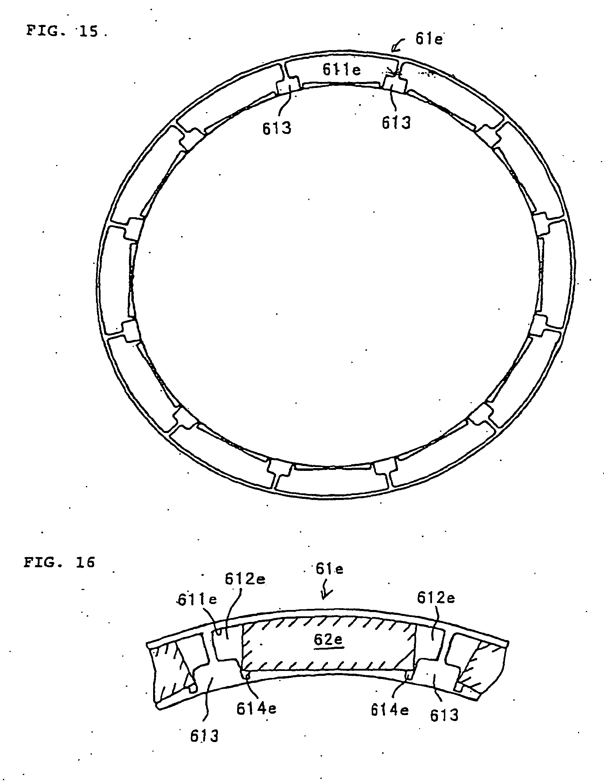

FIG. 15 is a view showing a shape in plan of a rotor yoke 61e in a fourth embodimeat of the present invention, and FIG. 16 is a partial enlarged view in a state wherein permanent magnets 62e are fitted in opening portions 611e of the rotor yoke 61e. In the figures, same reference characters to those described above denote the same or equivalent portions.

In the present embodiment, the rotor yoke 61e has special drum-shaped openings 611e, and permanent magnets 62e having a drum-shaped cross section are fitted in the openings 611e. As a result, gaps 612e for preventing leakage fluxes between adjacent ones of the permanent magnets 62e are formed at the opposite side portions of each of the permanent magnets 62e in the circumferential direction, and gaps 614e for limiting the magnetic path in the circumferential direction are formed also at the opposite end portions of each of the permanent magnets 62e adjacent the stator. Consequently, effects similar to those described above are achieved.

The invention provides a permanent magnet rotary electric motor as a starter-generator apparatus with which high driving torque is obtained when it functions as a starter motor whereas the driven torque can be suppressed low when it functions as a generator.

To achieve this, a permanent magnet rotary electric motor which includes a stator 50 and a winding 53 on the stator, and a substantially cylindrical rotor yoke 61 including a plurality of permanent magnets 62 disposed along a circumferential direction and rotatable around the stator 50 and wherein the rotor yoke 61 has a commutating pole portion 613 between each adjacent ones of the permanent magnets 62, is constructed such that a gap 612, 614 is provided at a portion between each of the permanent magnets 62 and the rotor yoke 61.

## Claims

1. A permanent magnet rotary electric motor which includes an inner stator (50) and a winding (53) on said stator, and a substantially cylindrical outer rotor yoke (61) including a plurality of opening portions (611) disposed along a circumferential direction and rotatable around said stator (50), into each of which a permanent magnet (62) is fitted/inserted, wherein said rotor yoke (61) has a commutating pole portion (613) between each adjacent ones of said permanent magnets (62),
**characterized in that**
- said permanent magnet rotary electric motor is a starter-generator apparatus (1),
- first and second gaps (612, 614) are provided at a portion between each of said permanent magnets (62) and said rotor yoke (61),
- a first gap (612) is formed at each of the opposite side portions of each of said permanent magnets (62) facing towards the circumferential direction,
- a second gap (614) is formed at each of the opposite end portions of each of said permanent magnets (62) adjacent said stator, and
- said first gap (612) and said second gap (614) being separated by said permanent magnet (62).

2. A permanent magnet rotary electric motor according to claim 1, **characterized in that** the first gap (612) formed at the side portion of each of said permanent magnets is greater than the second gap (614) formed at each of the opposite end portions of each of said permanent magnets adjacent said stator (50).

3. A permanent magnet rotary electric motor according to claim 1 or 2, **characterized in that** said gap (614) formed at each of the opposite end portions of each of said permanent magnets (62) adjacent said stator (50) is equal to an air gap between said rotor yoke (61) and said stator (50).

## Patentansprüche

1. Permanentmagnet-Rotationselektromotor, umfassend einen inneren Stator (50) und eine Wicklung (53) auf dem Stator, und ein im Wesentlichen zylindrisches Außenrotorjoch (61), welches eine Mehrzahl von Öffnungsabschnitten (611) umfasst, welche längs einer Umfangsrichtung angeordnet sind und um den Stator (50) herum drehbar sind, in jeden von denen ein Permanentmagnet (62) eingepasst/eingesetzt ist, wobei das Rotorjoch (61) einen Wendepolabschnitt (613) zwischen jeden benachbarten von den Permanentmagneten (62) hat,
**dadurch gekennzeichnet, dass**
- der Permanentmagnet-Rotationselektromotor eine Anlasser-Generatorvorrichtung (1) ist,
- erste und zweite Spalte (612, 614) an einem Abschnitt zwischen jedem von den Permanentmagneten (62) und dem Rotorjoch (61) vorgesehen sind,
- ein erster Spalt (612) an jedem von den entgegengesetzten Seitenabschnitten von jedem von den Permanentmagneten (62) ausgebildet ist, welcher zu der Umfangsrichtung hin weist,
- ein zweiter Spalt (614) an jedem von den entgegengesetzten Endabschnitten von jedem von den Permanentmagneten (62) benachbart dem Stator ausgebildet ist, und
- der erste Spalt (612) und der zweite Spalt (614) durch den Permanentmagneten (62) getrennt sind.

2. Permanentmagnet-Rotationselektromotor nach Anspruch 1, **dadurch gekennzeichnet, dass** der erste Spalt (612), welcher an dem Seitenabschnitt von jedem von den Permanentmagneten ausgebildet ist, größer als der zweite Spalt (614) ist, welcher an jedem von den entgegengesetzten Endabschnitten von jedem von den Permanentmagneten benachbart dem Stator (50) ausgebildet ist.

3. Permanentmagnet-Rotationselektromotor nach Anspruch 1 oder 2, **dadurch gekennzeichnet, dass** der Spalt (614), welcher an jedem von den entgegengesetzten Endabschnitten von jedem von den Permanentmagneten (62) benachbart dem Stator (50) ausgebildet ist, einem Luftspalt zwischen dem Rotorjoch (61) und dem Stator (50) entspricht.

## Revendications

1. Moteur électrique rotatif à aimant permanent qui comprend un stator interne (50) et un enroulement (53) sur ledit stator, et une culasse de rotor externe sensiblement cylindrique (61) comprenant une pluralité de portions d'ouverture (611) disposées selon une direction circonférentielle et pouvant être mises en rotation autour dudit stator (50), dans chacune desquelles un aimant permanent (62) est ajusté/inséré, dans lequel ladite culasse de rotor (61) a une partie de pole de commutation (613) entre chaque aimant permanent adjacent desdits aimants permanents (62),
**caractérisé en ce que**
- ledit moteur électrique rotatif à aimant permanent est un dispositif démarreur-générateur (1),
- des premier et second écartements (612, 614) sont agencés au niveau d'une partie entre chacun desdits aimants permanents (62) et ladite culasse de rotor (61),
- un premier écartement (612) est formé au niveau de chacune des parties latérales opposées de chacun desdits aimants permanents (62) en regard vers la direction circonférentielle,
- un second écartement (614) est formé au niveau de chacune des parties d'extrémité opposées de chacun desdits aimants permanents (62) adjacents audit stator, et
- ledit premier écartement (612) et ledit second écartement (614) étant séparés par ledit aimant permanent (62).

2. Moteur électrique rotatif à aimant permanent selon la revendication 1, **caractérisé en ce que** le premier écartement (612) formé au niveau de la partie latérale de chacun desdits aimants permanents est plus grand que le second écartement (614) formé au niveau de chacune des parties d'extrémité opposées de chacun desdits aimants permanents adjacents audit stator (50).

3. Moteur électrique rotatif à aimant permanent selon la revendication 1 ou 2, **caractérisé en ce que** ledit écartement (614) formé au niveau de chacune des parties d'extrémité opposées de chacun desdits aimants permanents (62) adjacents audit stator (50) est égal à un entrefer entre ladite culasse de rotor (61) et ledit stator (50).
